Europäisches Patentamt

European Patent Office

Office européen des brevets

(19)

(11) Publication number: **0 533 085 A1**

# (12) EUROPEAN PATENT APPLICATION

(21) Application number: **92115682.4**

(22) Date of filing: **14.09.92**

(51) Int. Cl.⁵: **B60C 3/04**

(30) Priority: **19.09.91 US 762907**

(43) Date of publication of application:
**24.03.93 Bulletin 93/12**

(84) Designated Contracting States:
**DE ES FR GB IT LU**

(71) Applicant: **MICHELIN RECHERCHE ET TECHNIOUE**
**Euro-résidence Grand-Places 14 A**
**CH-1700 Fribourg(CH)**

(72) Inventor: **Rhyne, Timothy Brett**
**114 Dellwood Drive**
**Greenville, S.C. 29609(US)**
Inventor: **Osborne, Daniel Grier**
**25, rue Joseph Castaigne**
**F-63118 Cebazat(FR)**

(74) Representative: **Devaux, Edmond-Yves et al**
**Michelin & Cie Service SRK. Brevets**
**F-63040 Clermont-Ferrand Cédex (FR)**

(54) **Tire structure for improved tread life.**

(57) A radial pneumatic tire (20) comprises a pair of axially spaced apart beads (42). A radially reinforced carcass (44) extends between and is secured at opposite end portions to the beads (42). The carcass (44) includes a plurality of parallel extending reinforcing members (203). Each of the reinforcing members is disposed in a radial plane. A tread (22) is located radially outward of a crown portion of the carcass (44). The tread (22) is for engagement with a ground surface. A belt reinforcement package (46) is disposed between the carcass (44) and the tread (22).

A rolling contact width of the tread portion is relatively large. A cross sectional width of the tire is 1.0 percent to about 10 percent greater than the same width of an industry standard tire. An outside diameter of the tire is 0.1 percent to 5.0 percent less than the same diameter of an industry standard tire. A profile has a radius of curvature R1 of said carcass measured with respect to a surface perpendicular to a mid-circumferential plane of said tire in a range of three times to four times the carcass radius $R_c$ when the tire is properly inflated. The radius of curvature extending two degrees to either side of the mid-circumferential plane.

FIG.5

EP 0 533 085 A1

The present invention relates generally to a pneumatic radial tire. In particular, the present invention relates to improvements to the carcass and belt package of the tire.

The tire industry is continually seeking increases in service life of a tire. Significant improvements were made in service life with the introduction of the radial pneumatic tire. Lesser impovements have periodically been made in the service life of the tire since the introduction of the radial tire.

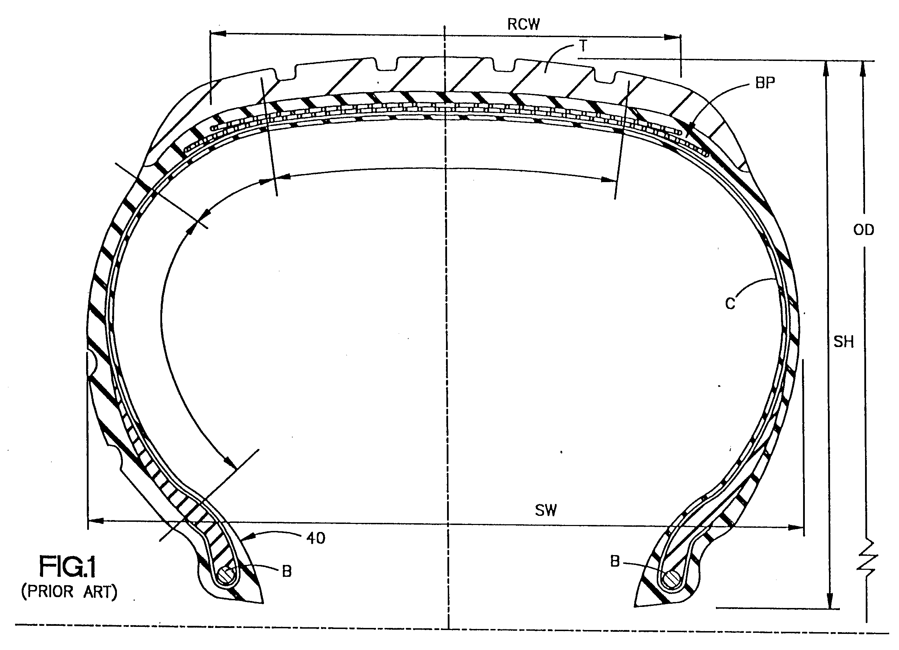

An example of a prior art radial pneumatic tire is illustrated in Fig. 1. The tire typically includes a pair of axially spaced apart beads B. A carcass C extends between the beads and is secured at axially opposite end portions to a respective one of the beads. The carcass includes substantially parallel extending reinforcing members of a suitable material. Each of the reinforcing members is disposed in a substantially radial plane. A belt package BP is located radially outward of a crown portion of the carcass. A tread T is located radially outward of the belt package for engaging a ground surface.

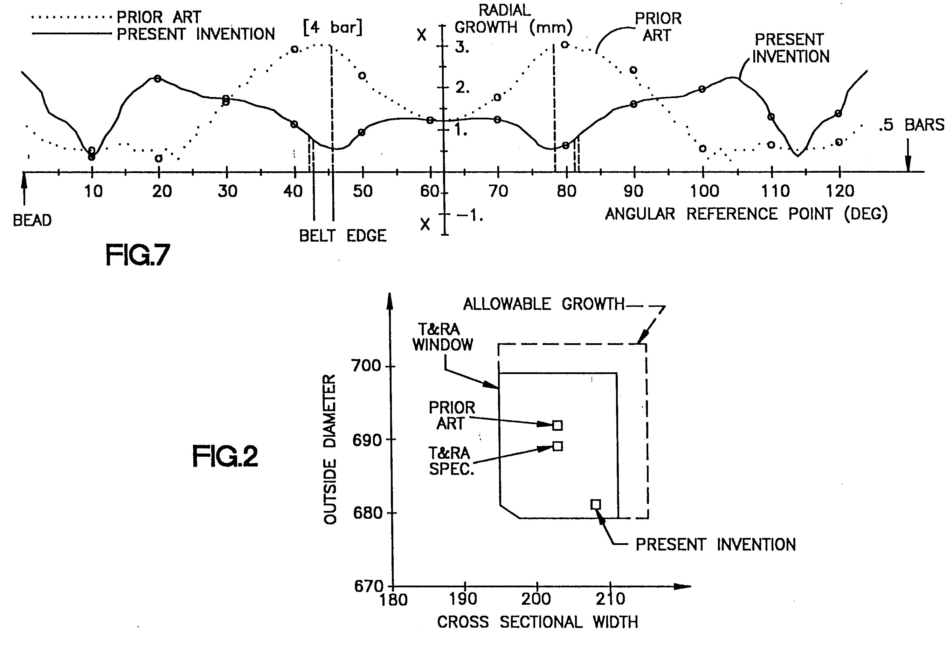

The industry standard tire is typically controlled or specified by an Association in each country, which defines the size and load range for passenger car tires. In the U.S., the Tire and Rim Association has such a specification. A typical specification (Fig. 2) defines the nominal outside diameter and the nominal cross sectional width for each tire size, with a window to show the variations allowed in the industry. Prior art tires are typically in a range of values close to the center of this window. The average tire of this invention is at a relatively small value of the outside diameter and at a relatively large value at the cross sectional width.

An agency of the United States Government has promoted consumer awareness and interest in increased service life through Uniform Tire Quality Grading Standards which were recently introduced. Such standards require the tire manufacturers indicate a tread life index on the sidewall of each tire produced.

As a part of the total improvement in tire service life, the tire designer has a number of options. These options include changing the tread compound, tread designs, carcass profile, bead, blet package, and reinforcing member materials. However, such improvements in service life often lead to tradeoffs in otehr tire performance characteristics.

An attempt to decrease rolling resistance in a pneumatic radial tire is disclosed in US Patent No. 4,513,802. US Patent No. 4,513,802 discloses a radial tire having a modified sidewall configuration. The curvature of the sidewall was modified by moving the maximum width position to a radial position closer to the tread of the tire.

A heavy truck tire is disclosed in US Patent No. 4,915,151. US Patent No. 4,915,151 discloses three relationships for controlling, optimizing, or minimizing the growth of the carcass sidewall due to inflation. One relationship is for a point near the bead area. Another relationship is for the maximum tread width area. Yet another relationship is for the shoulder area.

These two document teachings do not lead to improves service life of the tire tread.

The object of the present invention is to improve the tread life without lessening other tire performance characteristics, and unexpected results have been achieved by the combination of a particular profile of carcass reinforcement with the configuration of the belt package.

According to the invention, a radial pneumatic tire rotatable about an axis of rotation, comprising

. a pair of axially spaced apart beads ;

. a carcass extending between and secured at opposite end portions to said beads, said carcass including a plurality of parallel extending reinforcing members with each of said carcass reinforcing members disposed radially, and having a carcass radius when the tire is properly inflated defined as the perpendicular distance from an axis of rotation to a center point being the intersection of the carcass reinforcing member and a mid-circumferential plane of the tire in a radial plane ;

. a tread located radially outward a crown portion of said carcass, said tread having a radially outward tread surface for engagement with a ground surface ;

. a belt package disposed between said carcass and said tread and being formed by a first belt radially outward of said carcass having a width between 1,05 and 1,12 times the width of rolling contact surface, and by a second belt radially outward of said first belt having a width approximately equal to said rolling contact surface width, the reinforcing members of the two belts forming with the equatorial plane an angle between 10° and 30°, is characterized by the fact that the carcass has a profile when the tire is properly inflated, taken in the radial plane extending radially from the axis of rotation, comprising :

a) a center portion having a first radius of curvature with an origin in the mid-circumferential plane at a location radially inward from the center point, said first radius of curvature being at least three times the carcass radius and extending to an end point of said profile created by rotating the first radius of curvature two degrees in the radial plane to a side of the mid-circumfernatil plane ;

b) a first point of said profile located in the radial plane at the intersection of a line parallel to and spaced axially from the mid-circumferential plane a distance in the range of 35 percent to 45 percent of the carcass radius and a line parallel to the axis of rotation and spaced radially inward from the center point a distance in a range of 7 percent to 10 percent of said carcass radius ;

c) a second point of said profile between said first point and said end point in the radial plane, said second point located at the intersection of a line normal to a line connecting said first point and said end point at a location 65 percent of the distance from said first point toward said end point and a line parallel to the axis of rotation and spaced radially inward from the center point a distance in a range of 1.5 millimeters to 2.2 millimeters ;

d) a second portion of said profile having a second radius of curvature, with an origin point in the radial plane, defining that portion extending between said first point and said second point, said second radius of curvature having a magnitude in a range of 10 percent to 25 percent of said carcass radius ;

e) a blend portion of said profile having a third radius of curvature, with an origin in the radial plane, defining that portion extending between said second point and said end point, said third radius of curvature having a length defined by a linear distance from the second point through the origin point to an intersection point with the line from the end point to the origin of the first radius of curvature, said origin of the third radius of curvature being at the intersection point and said blend portion providing a continuous curvilinear profile at the end point and the second point ; and

f) a sidewall portion of said profile having a fourth radius of curvature and extending from the first point to a rim transition point in the radial plane being axially outward of the mid-circumferentila plane, wherein the ratio defined by the product of the fourth radius of curvature by the radial distance to each sidewall point from the axis of rotation divided by the radial distance to the first point from the axis of rotation is in an angle of 30 to 58 millimeters, said sidewall portion providing a continuous curvilinear profile at the first point and the rim transition point.

A preferential embodiment consists in the choice of a tire profile wider and flatter than the profile of the tire from prior art tires. The cross-sectional width of the tire is 1 to 10 percent greater than the nominal section width of the tire with the same size. The nominal outside diameter of the inflated tire is about .1 to 5 percent less than the outside diameter of the same tire size.

The relative increased size of the contact patch generally results in improved contact stress distribution and decreased average stresses at the tire-to-surface interface, and, as a consequence, improves the service life of the tire.

Preferentially, the radially outermost belt of the belt package has a predetermined radial droop. The radial droop is taken in a radial plane and is defined by the radial distance from the intersection of the belt and mid-circumferential plane to the lateral edge of axial limit of the second belt.

Further features of the present invention will become apparent to those skilled in the art to which the present invention relates from reading the specifications with reference to the accompanying drawings, in which :

- Fig. 1 is a cross sectional view of a prior art tire ;
- Fig. 2 shows the relationship between the outside diameter and the cross sectional width of a typical industry standard tire ;
- Fig. 3 is a cross sectional view of a tire embodying the structure of the present invention ;
- Fig. 4 is an enlarged plan view of a portion of the tread for the tire in Fig. 3 ;
- Fig. 5 is a detailed illustration of the carcass of the tire in Fig. 3 ;

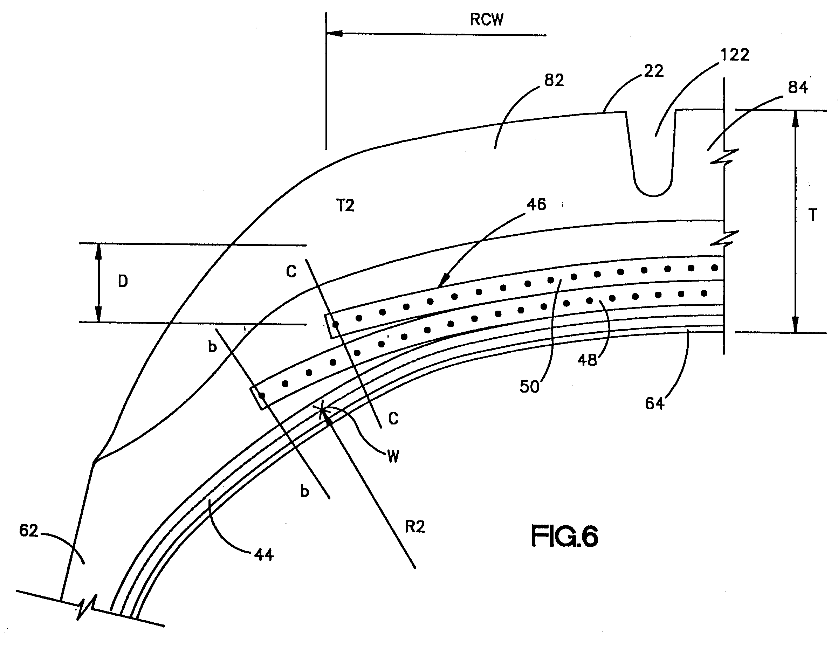

- Fig. 6 is an enlarged cross-sectional view of a shoulder area of the tire in Fig. 3 ;
- Fig. 7 is graph of the radial growths of a prior art tire and the tire embodying the present invention which occurs during inflation ;
- Fig. 8A is a graph of a belt edge shear strain ; and
- Fig. 8B is a graph of belt edge shear strain at a one degree of steer angle.

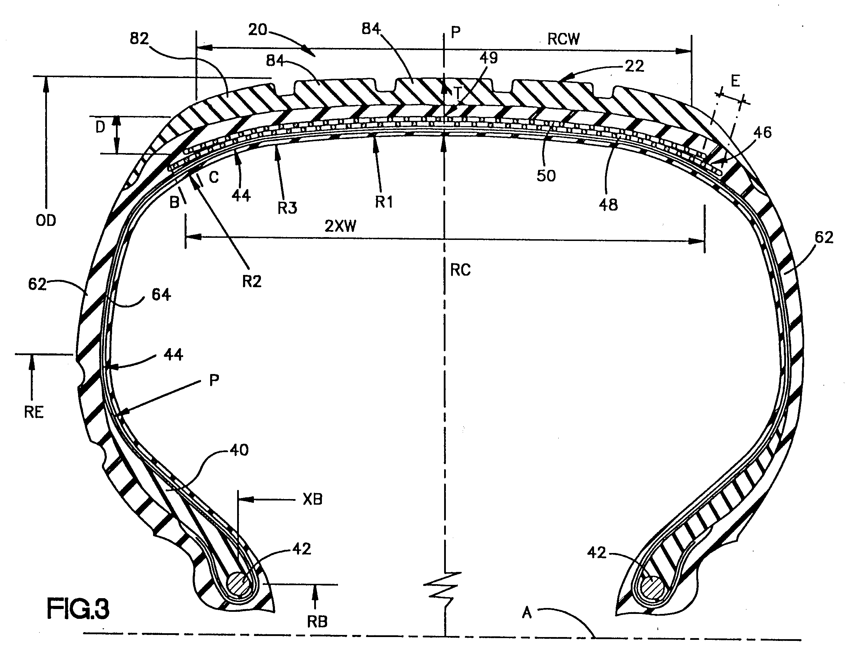

A tire 20 (Fig. 3) has a tread 22 and a structure embodying the present invention. The tire 20 is of the all season type. The tire 20 is rotatable about a longitudinal central axis A (Fig. 3). The tire 20 is bisected by a mid-circumferential plane P extending perpendicular to the axis A. The tire 20 is adapted to be mounted on a rim (not shown) and properly inflated according to various parameters. The rim axially and radially locates beads 42 of the tire 20.

The tire 20 includes a pair of axially spaced apart and substantially circumferentially inextensible beads 42. An apex 40 extends radially outwardly from a respective bead 42. The tire 20 has a carcass ply 44 extending between and secured at respective axially opposite end portions to a respective bead 42. The carcass ply 44 has a plurality of parallel extending reinforcing members. The reinforcing members extend in a direction substantially parallel to a radial plane extending from the axis A.

The reinforcing members are made from any suitable material but are preferably polyester. The size and strength of the reinforcing members will change as a function of various tire parameters.

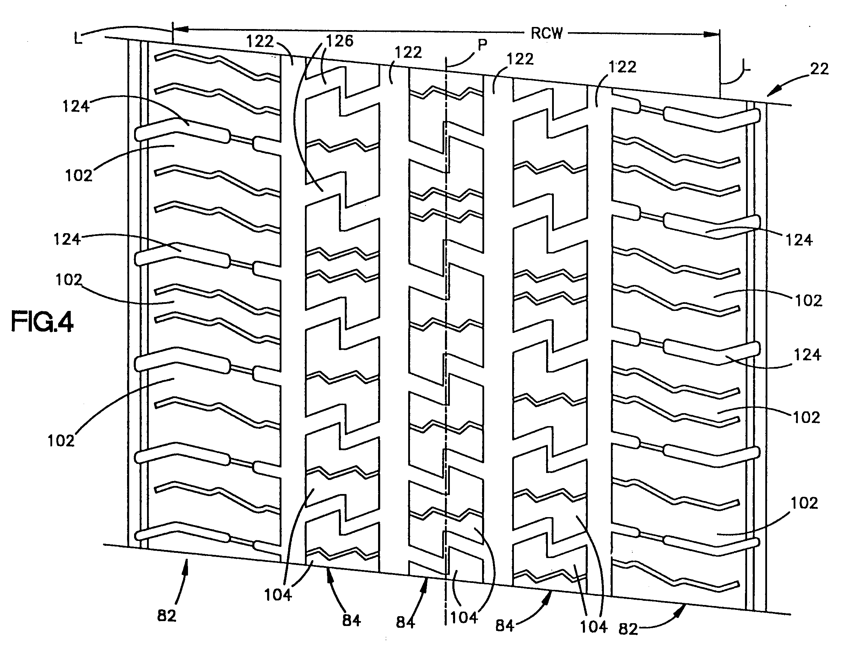

The tread 22 of the tire 20 includes a pair of shoulder ribs 82 (Fig. 4) which are located at axially opposite end portions of the tire. The tread 22 also includes three intermediate ribs 84. However, it will be apparent that any number of intermediate ribs may be employed dependent upon the size, loading and other factors of the tire 20 and its desired application.

A belt package 46 is located radially outwardly of the carcass 44. A Pair of annular steel belts 48, 50 comprise the belt package 46. Rubber is located outwardly of the carcass ply 44 in the sidewalls 62 of the tire 20 (Fig. 3). Rubber is also located in the tread 22 at a location radially outwardly of the belts 46. The rubber in the sidewalls 62 and the tread 22 may be the same but is preferably different for different applications. Preferably the tread 22 includes rubber having a greater durometer hardness than the rubber in the sidewalls 62. The relatively harder rubber generally resists abrasion better. The rubber in the tread 22 and the sidewalls 62 may be of any suitable compound based on natural or synthetic rubber or any suitable combination thereof. The tire 20 also includes a relatively air permeable inner liner 64.

Each of the shoulder ribs 82 includes a plurality of tread elements 102 (Fig. 4), which are arranged in a circumferential array about the outer circumference of the tire 20. Each of the intermediate ribs 84 includes a plurality of tread elements 104 which are also arranged in a circumferential array about the outer periphery of the tire 20 at a different axial location than the tread elements 102. Each of the tread elements 102, 104 engage a ground surface as the tire 20 rotates through a contact patch. Thus, all of the load transmitted between the carcass ply 44 and the ground surface is transmitted through the tread elements 102, 104. The void ratio of the tread 22 is at least .25 for the service life of the tire and preferably at least .33. The void ratio is defined as the area of non-contact located between the axial limits L of the rolling tread width RCW divided by the total area between the axial limits of the rolling tread width.

Each rib 82, 84 is axially separated from an axially adjacent rib by a relatively wide and continuous circumferential groove 122. Each tread element 102 located in a respective shoulder rib 82 is separated from a circumferentially adjacent shoulder tread element by a relatively wide and deep transverse by extending groove 124. Each tread element 104 in an respective intermediate rib 84 is separated from a circumferentially adjacent intermediate tread element by a transverse groove 126. The transverse grooves 124, 126 define circumferential limits of a respective tread element 102, 104. The transverse grooves 124, 126 may be of any configuration when viewed in a direction normal to the surfaces defining the grooves, for example, straight, curved or, as illustrated, zigzagged. The radial depth of the circumferential grooves 122 and transverse grooves 124, 126 is preferably relatively equal throughout the tread 22 of a distance about 10/32 inch. The tread 22 has axially limits L defining a rolling tread width RCW as the tire 20 rotates through a contact patch. The relatively wide and deep grooves 124 extending axially inward from the axial limits L defining the rolling tread width RCW enable the tire 20 having a tread according to the present invention to be labeled all season.

It will be noted the tread elements 104 and intermediate ribs 84 are circumferentially offset from axially adjacent tread elements 104 in the intermediate ribs 84 and from the tread elements 102 in the shoulder ribs 82. This results in a relatively quiet tire as the tire 20 rotates during operation on a vehicle.

Each tread element 104 in a respective intermediate rib 84 may be of any suitable configuration when viewed in a direction normal to the radially outer surface of the tread element.

Each of the tread elements 104 have a substantially Z-shaped appearance. Each tread element 102 has a substantially rectangular configuration located within the axial limit L of the rolling tread width RCW.

It is the structure of the tire 20 which uniquely defines the tire embodying the present invention from the tires previously known. Specifically the profile of the carcass 44 and the configuration of the belt package 46 differentiate the tire 20 from the heretofore known tires.

The belt package 46 is relatively wide when compared to those in the prior art. The belt package is also relatively flatter than a prior art tire. The relatively wide belt package 46 allows the tire 20 embodying structure of the present invention to have a relatively wide contact patch or footpring as the tire rotates. The relatively large contact patch allows the load of the tire to be distributed over a relatively larger surface area in contact with the ground surface. This results in lower normal stresses in the tread 22 of the tire 20. This provides several advantages in that less heat is built up permitting longer wear in the tread 22 of the tire.

The belt package 46 includes a first annular belt 48 which is located radially outward of the carcass 44. The first belt 48 has an axially width which is in the range of about 105 to 112 % of the rolling tread width RCW. The first belt 48 has a plurality of substantially parallel extending reinforcing members therein. The reinforcing members are preferably steel wires. Each of the reinforcing members extend at an angle relative to the mid-circumferential plane in the range of about 20° to 24°.

The belt package 46 also includes a second belt 50 located radially outwardly of the first belt 48. The second belt 50 has a second axial width which is approximately equal or slightly greater than the axial width of the rolling tread width RCW which is defined by axial limits L (Fig. 4).

The second belt 50 or radially outward belt has radial droop D characteristic which defines a relatively flat profile when viewed in cross-section as illustrated in Fig. 3. For exemple, a range of passenger tires will have a radial droop D in the range of 6 millimeters to 10 millimeters. The radial droop is defined as the distance in a direction radially from a point 49 in the second belt 50 at the mid-circumferential plane to the belt edge (Fig. 3).

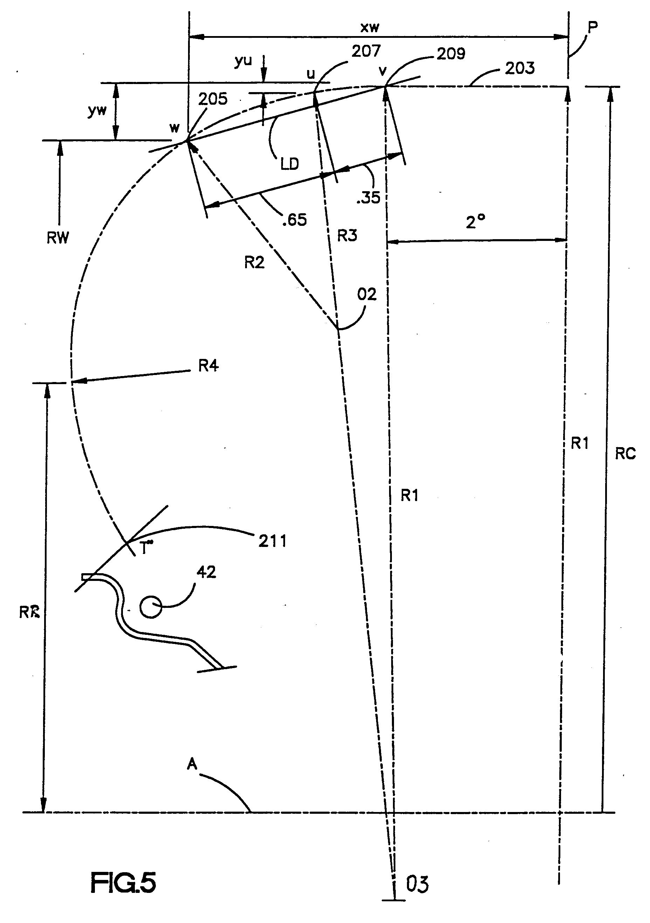

The carcass has a profile taken in a radial plane when the tire is properly inflated (Fig. 5). The profile is defined by a central portion having a first radius of curvature R1 taken at the intersection of one of the carcass reinforcing members 203 and a mid-circumferential plane P of the tire 20.

The first radius of curvature R1 is at least three times the carcass radius RC when the tire is properly inflated. The first radius of curvature R1 extends 2 degrees to either side of the mid-circumferential plane P.

A first point 205 defined by an axial distance XW from the mid-circumferential plane in a range of about 35 percent to about 45 percent of the carcass radius RC and a first radial distance YW measured radially inwardly from the intersection of one of the carcass reinforcing members 203 and the mid-circumferential plane P in a range of about 7 percent to about 10 percent of the carcass radius RC. A second point 207 defined between the first point 205 and an end point 209 of the arc created by the first radius of curvature R1. The second point 207 defined from the location 65 percent of a linear distance LD from the first point to the end point by constructing a normal to the linear distance LD. The normal intersects a second radial distance YU measured inwardly from the intersection of one of the carcass reinforcing members 203 and the mid-circumferential plane P a distance of about 1.5 to 2.2 millimeters. The intersection defining the second point 207. A second radius of curvature R2 is in the range of about 10 percent to about 25 percent of the carcass radius.

Whereby the second radius R2 measured to both the first point 205 and the second point 207 defines a point of origin 02 of the second radius of curvature. A blend portion has a third radius of curvature R3 between the second point 207 and the end point 209 created by the first radius of curvature R1 through its arc. The blend portion has a third radius of curvature R3 defined by a distance whre the line from the second point 207 throught the origin point 02 intersects a line extending between the origin of the first radius of curvature R1 and the end point 209 of the arc created by the first radius of curvature R1. A sidewall portion extends from the first point 205 to a rim transition point 211 in a direction radially outward of the mid-circumferential plane with a fourth radius of curvature R4. The ratio of the fourth radius of curvature times the radius RR to a sidewall point divided by the radius RW to the first point is in the range of 30 to 58 millimeters.

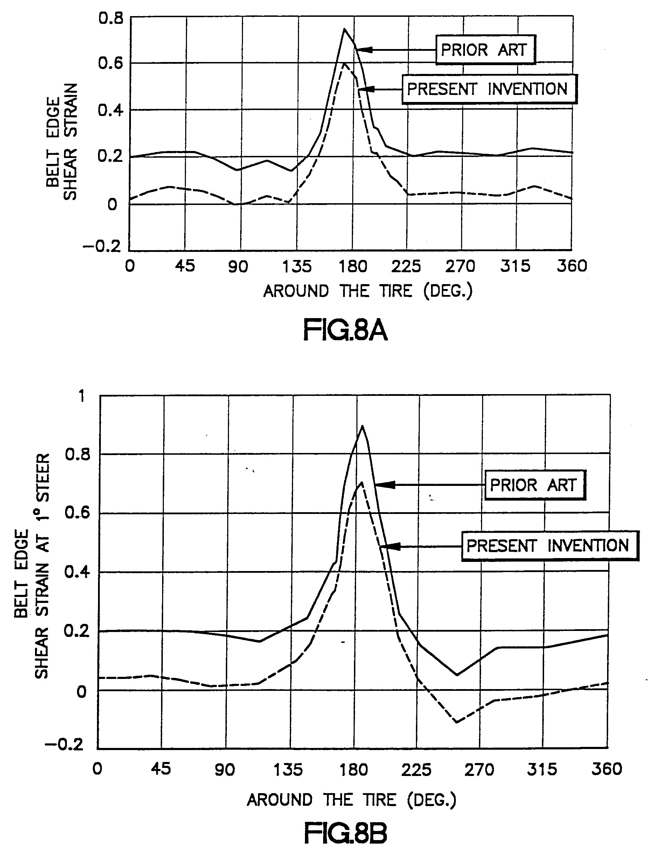

The profile of the carcass 44 according to the present invention combined with the configuration of the belt package 46 minimizes also stresses at each lateral edge of the belt package 46 (Fig. 8) when the tire 20 is inflated from essentially an uninflated condition to a predetermined proper inflation pressure. The inflation pressure is determined by the size and load rating of the tire 20. The first radial growth at the mid-circumferential plane during inflation is limited preferably in the range of 0.3 mm to about 0.5 mm. The second radial growth at each lateral belt edge during the inflation process grows less than the first radial growth. A third growth in the carcass at each sidewall taken transverse to the mid-circumferential plane during the inflation process is greater than the first radial growth. The second radial growth is preferably 60 to 90 percent of the first radial growth. The third growth is 200 to 400 percent of the first growth, and preferably 260 to 370 percent.

Thus, the maximum dynamic shear strains are limited at the lateral belt edges during contact with the ground surface in a manner such that the maximum shear strain is reduced by at least 20 % when compared with the same dynamic shear strains of prior art tires constructed in a manner consistent with the Tire and Rim standard tire.

The profile of the present invention tire, defined by its cross sectional width and its outside diameter is illustrated in the lower right hand corner of the TRA window (Fig. 2). This profile combined with the profile of the carcass reinforcement and the configuration of the belt package allows a tire which had a relatively uniform thickness of rubber in the tread 22 of the tire 20. The tread elements of the tire 20 embodying the present invention have been analyzed to determine that they wear at a relatively even rate. This allows the tire 20 of the present invention not to have to beef up the shoulder ribs or shoulder tread elements which can be of any shape and configuration and number.

A tire 20 having a structure embodying the present invention has been tested and shown to have 30 % of its starting radial tread depth at the equivalent of 100,000 miles of service. The tire 20 also has been tested and found to have a UTQG rating in the range of 480 to 520, depending on the size of the tire 20.

During reduction to practice of the present invention, a number of experimental tests were performed. During each test a prior art tire was compared with the present invention tire having the same size and overall load carrying capability. That is, two tires being compared with each other both fit the same industry Tire and Rim Association standard. A number of comparisons were made including 15", 14" and 13" standard tires.

A typical comparison is shown in comparative example 1. This comparison was made for a Michelin tire having a nominal size of 205/75 R15. The values in this table have been normalized to an index value of 100 for the reference tire. For example, the contact surface ratio of the prior art tire has a value of .667 and the present invention tire had a contact surface ratio of .661. Using a value of 100 for .667 the present invention tire has a value of 99. Other values of particular interest include the width of the contact area having an 8 percent increase for the present invention tire and the reduced normal stress on the present invention tire. Both the average normal stress per rib and the difference between the maximum and minimum stress have significant reductions when compared with the prior art tire. This is accomplished with only a one percent increase in the tire mass.

**Comparative Example 1**

| Parameter W. Same Size Tire and Load | Prior Art | Present Invention |
|---|---|---|
| Contact Surface Ratio | 100 | 99 |
| Width of Contact Area | 100 | 108 |
| Length of Contact Area | 100 | 96 |
| Average Total Load Per Rib | 100 | 100 |
| Difference in Max.- Min. Load/Rib | 100 | 27 |
| Average Normal Stress Per Rib | 100 | 88 |
| Normal Stress Max.-Min. Difference | 100 | 68 |
| Tire Mass | 100 | 101 |

The performance of the present invention tire during cornering maneuvers of the vehicle were also simulated. For this simulation, both the prior art tire and the present invention tire were tested at a one degree steer angle. The resulting longitudinal, lateral, and normal stress for this same 205/75 R15 tire are shown in comparative example. This table is also normalized at a value of 100 for the prior art tire. Of particular interest is the lateral stress average which is significantly greater for the present invention tire. This results in a greater cornering power for the tire of the present invention. Lower longitudinal stress and stress differences as well as normal stresses and differences in stress are obvious for the present invention. The results as a whole indicate a much improved stress distribution that that of the prior art tire.

**Comparative Example 2**

| Parameter one degree steer angle | Prior Art | Present Invention |
|---|---|---|
| Longitudinal X-Stress Average | 100 | 82 |
| X-Stress Max.-Min. Difference | 100 | 65 |
| Lateral Y-Stress Average | 100 | 111 |
| Y-Stress Max.-Min. Difference | 100 | 59 |
| Normal Z-Stress Average | 100 | 92 |
| Z-Stress Max.-Min. Difference | 100 | 74 |

From the examples illustrated above one can expect this present invention tire to have significant improvements in tread life. The lower stresses and better stress distribution should result in less scrubbing of the tire contact patch on the ground surface. However, significant improvements in one area of performance should not be achieved at the expense of other performance parameters. A number of different size tires were tested for noise, comfort, handling, and traction. These results are shown in the table of comparative example 3. Also shown in this table are the significant tread life improvements. Some improvements in noise, handling and traction are noted with comfort remaining the same. In conclusion, tread life has been significantly improved over the prior art tire while other peformance parameters are maintained at a relatively high level.

**Comparative Example 3**

| Performance | Prior Art | Present Invention |
|---|---|---|
| Tread Life | | |
| High Severity | 100 | 150 |
| Low Severity | 100 | 120 |
| Irregular | Good | Good |
| UTQG treadwear rating | 330 | 480-520 |
| Noise | 6.3 | 6.5 |
| Comfort | 6.4 | 6.4 |
| Handling | 6.5 | 6.6 |
| Traction | | |
| Wet | 100 | 104 |
| Dry | 100 | 102 |

A typical plot of the radial growth under inflation from 0.5 bars to 4.0 bars of the present invention tire shows a considerable change (Fig. 7). In the tire according to the present invention, the radial deformation is more uniform, particularly when this one is measured between the belt edges.

Furthermore, Figs. 8A and 8B show clearly the decreasing of belt edge shear stream (measured between edges of the belt), whether at an 0° steer or at 1° steer angle.

While the present invention has been disclosed with the preferred embodiments and best mode defined, it should be understood that there may be other embodiments which fall within the scope and spirit of the invention as defined.

**Claims**

1. A radial pneumatic tire (20) rotatable about an axis of rotation, comprising
   - a pair of axially spaced apart beads (42),
   - a carcass (44) extending between and secured at opposite end portions to said beads (42), said carcass (44) including a plurality of parallel extending reinforcing members (203) with each of said carcass reinforcing members disposed radially, and having a carcass radius $R_c$ when the tire is properly inflated, defined as the perpendicular distance from an axis of rotation A to a center point being the intersection of the carcass reinforcing member (203) and a mid-circumferential plane P of the tire in a radial plane,
   - a tread (22) located radially outward of a crown portion of said carcass (44), said tread (22) having a radially outward tread surface for engagement with a ground surface,
   - a belt package (46) disposed between said carcass (44) and said tread (22) and being formed by a first belt (48) radially outward of said carcass (44) having a width between 1,05 and 1,12 times the width of rolling contact surface RCW, and by a second belt (50) radially outward of said first belt (48) having a width approximately equal to said rolling contact surface width RCW, the reinforcing members of the two belts forming with the equatorial plane an angle between 10° and 30°,
   characterised by the fact that the carcass (44) has a profile when the tire is properly inflated, taken in the radial plane extending radially from the axis of rotation, comprising :

a) a center portion having a first radius of curvature R1 with an origin in the mid-circumferential plane at a location radially inward from the center point, said first radius of curvature R1 being at least three times the carcass radius $R_c$ and extending to an end point (209) of said profile created by rotating the first radius of curvature R1 two degrees in the radial plane to a side of the mid-circumferential plane P ;

b) a first point (205) of said profile located in the radial plane P at the intersection of a line parallel to and spaced axially from the mid-circumferential plane a distance XW in the range of 35 percent to 45 percent of the carcass radius $R_c$ and a line parallel to the axis of rotation and spaced radially inward from the center point a distance YW in a range of 7 percent to 10 percent of said carcass radius Rc ;

c) a second point (207) of said profile between said first point (205) and said end point (209) in the radial plane, said second point (207) located at the intersection of a line normal to a line connecting said first point (205) and said end point (209) at a location 65 percent of the distance LD from said first point (205) toward said end point (209) at a line parallel to the axis of rotation and spaced radially inward from the center point a distance YU in a range of 1.5 millimeters to 2.2 millimeters ;

d) a second portion of said profile having a second radius of curvature R2, with an origin point 02 in the radial plane, defining that portion extending between said first point (205) and said second point (207), said second radius of curvature having a magnitude in a range of 10 percent to 25 percent of said carcass radius $R_c$ ;

e) a blend portion fo said profile having a third radius of curvature R3, with an origin 03 in the radial plane, defining that portion extending between said second point (207) and said end point (209), said third radius of curvature R3 having a length defined by a linear distance from the second point (207) through the origin point 03 to an intersection point with the line from the end point (209) to the origin of the first radius of curvature R1, said origin 03 of the third radius of curvature R3 being at the intersection point and said blend portion providing a continuous curvilinear profile at the end point (209) and the second point (207) ; and

f) a sidewall portion of said profile having a fourth radius of curvature $R_4$ and extending from the first point (205) to a rim transition point (211) in the radial plane being axially outward of the mid-circumferential plane, wherein the ratio defined by the product of the fourth radius of curvature $R_4$ by the radial distance $R_R$ to each sidewall point from the axis of rotation, divided by the radial distance to the first point (205) from the axis of rotation is in an range of 30 to 58 millimeters, said sidewall portion providing a continuous curvilinear profile at the first point (205) and the rim transition point (211).

2. A tire according to claim 1 wherein said reinforcing members (203) are made of a polyester material.

3. A tire according to claim 2, characterized by the fact that the second belt (50) has a predetermined radial droop distance D between 6 mm and 10 mm.

4. A tire according to claim 3, characterized by the fact that it has a cross sectional width SW which is about 1.0 percent to about 10 percent greater than the nominal section of a tire with the same size, and an outside diameter which is about .1 percent to about 5.0 percent less than the nominal outside diameter of a tire with the same size.

5. A radial tire(20)comprising :
   - a pair of axially spaced apart beads (42) ;
   - a radially reinforced carcass (44) extending between and secured at opposite end portions to said beads (42) said carcass (44) including a plurality of parallel extending reinforcing members (203), each of said reinforcing members (203) being disposed in a radial plane ;
   - a tread (22) located radially outward of a crown portion of said carcass (44), said tread (22) for engagement with a ground surface ;
   - a belt package (46) disposed between said carcass (44) and said tread (22) ; and
   - means for limiting shear strains at each lateral belt edge of the belt package (46) during inflation of the tire from an uninflated condition to a predetermined pressure including :
      . means for limiting a first radial growth of the carcass (44) at a mid-circumferential plane of said tire to a growth of about .3 millimeter to .5 millimeter ;
      . means for limiting a second radial growth of the carcass (44) at each said lateral belt edge to a growth less than said first radial growth ; and

. means for limiting a third growth of the carcass sidewall in a direction transverse to the mid-circumferential plane P, said third growth being greater than said first radial growth.

FIG.1
(PRIOR ART)

FIG.7

FIG.2

EP 0 533 085 A1

FIG.3

FIG.4

EP 0 533 085 A1

FIG.5

FIG.6

EP 0 533 085 A1

FIG.8A

FIG.8B

16

European Patent
Office

**EUROPEAN SEARCH REPORT**

Application Number

EP    92 11 5682

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2 647 716 (SUMITOMO RUBBER INDUSTRIES LTD.) <br> * claims; figure 1 * <br> --- | 1 | B60C3/04 |
| A | EP-A-0 415 684 (SUMITOMO RUBBER INDUSTRIES LTD.) <br> * claims; figures 3,7 * <br> --- | 5 | |
| A | FR-A-2 385 518 (THE GOODYEAR TIRE&RUBBER CO.) <br> * claims; figures * <br> --- | 5 | |
| A | GB-A-2 070 526 (PIRELLI SPA) <br> --- | 5 | |
| A | EP-A-0 273 558 (BRIDGESTONE CORP.) <br> <br> ----- | 1 | |
| | | | TECHNICAL FIELDS SEARCHED (Int. Cl.5 ) |
| | | | B60C |

The present search report has been drawn up for all claims

| Place of search | Date of completion of the search | Examiner |
|---|---|---|
| THE HAGUE | 14 DECEMBER 1992 | BARADAT J.L. |